# EUROPÄISCHE PATENTSCHRIFT

(11) **EP 2 972 600 B1**
(45) Veröffentlichungstag und Bekanntmachung des Hinweises auf die Patenterteilung: **15.03.2017**
(21) Anmeldenummer: 13824485.0
(22) Anmeldetag: 20.12.2013
(51) Int. Cl.: G05B 9/02, H02M 1/32, H02M 7/5387

(54) **SICHERE SPANNUNGSVERBINDUNG EINES ANTRIEBSWECHSELRICHTERS**
RELIABLE VOLTAGE CONNECTION OF A DRIVE INVERTER
CONNEXION DE TENSION SÛRE D'UN ONDULEUR DE TRACTION

(30) Priorität: 15.03.2013 DE 102013004451
(43) Veröffentlichungstag der Anmeldung: 20.01.2016
(73) Patentinhaber: Baumüller Nürnberg GmbH, 90482 Nürnberg (DE)
(72) Erfinder: HENSEL, Uwe, 90411 Nürnberg (DE); HELMERTH, Axel, 57234 Wilnsdorf (DE); DIMAS-ZEKRI, Magdi, 90478 Nürnberg (DE)
(74) Vertreter: FDST Patentanwälte
(86) Internationale Anmeldenummer: PCT/EP2013/003884
(87) Internationale Veröffentlichungsnummer: WO 2014/139549

(56) Entgegenhaltungen:
- EP-A2- 1 182 762
- US-A1- 2004 165 404

## Beschreibung

Die Erfindung betrifft eine Vorrichtung und ein Verfahren zur Verbindung und sicheren Trennung eines Spannungsanschlusses eines Antriebswechselrichters für eine elektrische Maschine an eine bzw. von einer Versorgungsspannung. Unter dem Begriff "sicher" wird hierbei die Erfüllung einer Sicherheitsfunktion, insbesondere der Safe-Torque-Funktion (STO), verstanden.

Im Bereich der Antriebstechnik mit elektrischen Maschinen, insbesondere mit Synchron- oder Asynchronmotoren, sind sicherheitsgerichtete Funktionen gefordert, um Verletzungen infolge von ungewollten oder unerwarteten Drehungen der Antriebe zuverlässig zu vermeiden. Eine wesentliche Sicherheitsfunktion ist hierbei ein als Safe-Torque-Off (STO) bezeichneter sicherer Halt des Antriebs. Hierbei wird dieser sicher von dessen Energieversorgung getrennt, um nach Auslösung der Sicherheitsfunktion einen sofortigen Stopp zu bewirken.

Bei üblicherweise mit Wechselrichtern und insbesondere mit Frequenzumrichtern gesteuert gespeisten Drehstrommotoren erfolgt die Steuerung bzw. Auslösung der oder jeder Sicherheitsfunktion am Wechselrichter bzw. Frequenzumrichter, in dem dieser und damit auch der Drehstrommotor bzw. die elektrische Maschine von der Energieversorgung getrennt wird. Zur Energieversorgung des nachfolgend als Antriebswechselrichter bezeichneten Wechsel- bzw. Umrichters dient üblicherweise eine 24V-DC-Eingangsspannung, die dem Antriebswechselrichter über einen Schalter, beispielsweise ein Relais, zugeführt wird. Wird der Schalter im Zuge einer Stop-Funktion zur Abschaltung der Maschine betätigt, so wird die zur Steuerung des Frequenzumrichters benötigte Eingangsspannung und damit dessen Versorgung abgeschaltet.

Aus der US 7,868,619 B2 ist eine Safe-Torque-Off-Verbindung (STO-Funktion) bekannt, bei der die 24V-Eingangsspannung für die Steuereinrichtung sowie für die von dieser angesteuerten Treiber der Leistungs- oder Leistungshalbleiterschalter des Frequenzumrichters und damit die Stromversorgung für die elektrische Maschine mittels eines zweipoligen Schalters unterbrochen wird.

US 2004/0165404 zeigt eine Vorrichtung gemäß dem Kennzeichnenden Teil des Anspruchs 1.

Der Erfindung liegt die Aufgabe zugrunde, eine besonders geeignete Vorrichtung und ein verbessertes Verfahren zum sicheren Betrieb einer elektrischen Maschine anzugeben. Insbesondere soll eine sichere Trennung eines Wechsel- oder Umrichters der elektrischen Maschine mit bzw. von einer Versorgungsspannung gewährleistet sein. Vorzugsweise zusätzlich soll zudem eine zuverlässige Steuerung einer Sicherheitsfunktion der elektrischen Maschine auch bei einer Eingangsspannung größer oder gleich 60V, insbesondere bei gleichzeitig möglichst geringer Verlustleistung, angeben werden.

Diese Aufgabe wird erfindungsgemäß bezüglich der Vorrichtung durch die Merkmale des Anspruchs 1 und bezüglich des Verfahrens durch die Merkmale des Anspruchs 16 gelöst. Vorteilhafte Ausgestaltungen, Varianten und Weiterbildungen sind Gegenstand der Unteransprüche.

Erfindungsgemäß sind zur Verbindung und sicheren Trennung eines Spannungsanschlusses eines Antriebswechselrichters für eine elektrische Maschine mit bzw. von einer Versorgungsspannung eine Verbindungs- und Trennschaltung, die zwischen einen Anschluss für die Versorgungsspannung und den Spannungsanschluss geschaltet ist, und eine Steuer- und/oder Regeleinrichtung vorgesehen. Diese ist vorzugsweise schaltungs- und/oder programmtechnisch dazu vorgesehen und eingerichtet, insbesondere die Funktionsfähigkeit und/oder -sicherheit der Verbindungs- und Trennschaltung zu prüfen.

Die Verbindungs- und Trennschaltung umfasst zwei zwischen den Anschluss für die Versorgungsspannung und den Spannungsanschluss des Antriebswechselrichters geschaltete Schaltzweige, über welche die Versorgungsspannung mittels der Steuer- bzw. Regeleinrichtung an den Spannungsanschluss des Antriebswechselrichters geschaltet wird. In einem ersten Prüfmodus schaltet die Steuer- bzw. Regeleinrichtung einen der Schaltzweige ab und liest aus diesem ein Sensorsignal aus, während der andere Schaltzweig eingeschaltet ist und die Versorgungsspannung an den Spannungsanschluss des Antriebswechselrichters führt.

Im Zuge eines weitergehenden Prüfungszyklus werden die Funktionsmodi der beiden Schaltzweige vertauscht und hierzu der andere Schaltzweig abgeschaltet und aus diesem ein entsprechendes Sensorsignal ausgelesen, während der parallele Schaltzweig eingeschaltet ist und nunmehr die Versorgungsspannung an den Spannungsanschluss des Antriebswechselrichters führt. Auf diese Weise kann vorzugsweise zyklisch und in praktisch beliebigen Zeitabständen eine Prüfung der Funktionsfähigkeit der beiden Schaltzweige der Prüfschaltung erfolgen, ohne dass sich der Spannungspegel am Spannungsanschluss des Antriebswechselrichters ändert. Dies ermöglicht in einfacher sowie zuverlässiger Art und Weise eine sichere Prüfung der Verbindungs- und Unterbrechungs- oder Trennfunktion der beiden Schaltzweige während des Betriebs des Antriebswechselrichters und somit bei arbeitender elektrischer Maschine.

In vorteilhafter Ausgestaltung der Schaltzweige sind diese im Wesentlichen mit jeweils einem Halbleiterschalter versehen, der zwischen den Anschluss für die Versorgungsspannung und den Spannungsanschluss des Antriebswechselrichters sowie ansteuerseitig an die Steuer- bzw. Regeleinrichtung geschaltet ist. Ein Sensorabgriff, der zweckmäßigerweise zwischen den jeweiligen Halbleiterschalter, insbesondere emitter- oder sourceseitig, und eine Diode geführt ist, ist an die Steuereinrichtung geführt und liefert an diese während des ersten Prüfmodus den aktuell abgegriffenen Spannungspegel.

Der im jeweiligen Schaltzweig sensierte Spannungspegel gibt zuverlässig Aufschluss über die Funktionsfähigkeit des jeweiligen Halbleiters und damit des entsprechenden Schaltzweiges. Ist der entsprechende Spannungspegel bei abgeschaltetem Halbleiter auf Null (0 V) abgefallen, so wird von der Funktionsfähigkeit des entsprechenden Halbleiters ausgegangen, da erkanntermaßen bei einem defekten oder fehlerhaft arbeitenden Halbleiterschalter grundsätzlich dessen steuerbarer Strompfad (zwischen Source und Drain bei einem Feldeffekttransistor oder zwischen Kollektor und Emitter bei einem bipolaren Transistor) kurzgeschlossen ist. Im Fehlerfall wäre daher am Sensorabgriff ein von Null verschiedener und der Versorgungsspannung entsprechender Pegel zu erwarten.

Gemäß einer besonders zweckmäßigen Weiterbildung ist die Verbindungs- und Trennschaltung redundant ausgeführt. Hinsichtlich dieser Weiterbildung geht die Erfindung von der Überlegung aus, dass üblicherweise der Antriebswechselrichter, der regelmäßig als Vollbrücke insbesondere in B6-Schaltung mit entsprechend beispielsweise sechs Leistungshalbleitern ausgeführt ist, die häufig über Optokoppler angesteuert werden, hinsichtlich deren Spannungsversorgung eine sogenannte High-Side und eine Low-Side aufweist. Für eine besonders sichere Abschaltung des Antriebswechselrichters werden daher vorzugsweise sowohl die High-Side als auch die Low-Side von der Versorgungsspannung getrennt. Hierzu weist die redundante Verbindungs- und Trennschaltung vorzugsweise zwei Prüfkanäle auf, die ausgangsseitig mit jeweils einer der beiden Anschlussseiten, also der High-Side und der Low-Side des Antriebswechselrichters verbunden sind.

Geeigneterweise ist die Steuer bzw. Regeleinrichtung schaltungs- und/oder programmtechnisch dazu eingerichtet, die über die Schaltzweige der Verbindungs- und Trennschaltung hergestellte Verbindung zwischen der Versorgungsspannung und dem Spannungsanschluss des Antriebswechselrichters zu unterbrechen. Die Unterbrechung erfolgt insbesondere in Folge der Auslösung oder Aktivierung einer Sicherheitsfunktion, insbesondere der sogenannten Safe-Torque-Off-Funktion.

Zur Erhöhung der Sicherheit im Falle der Unterbrechung der Verbindung zwischen der Versorgungsspannung und dem Spannungsanschluss des Antriebswechselrichters ist eine ansteuerbare Trennschaltung vorgesehen, mittels derer der Spannungsanschluss des Antriebswechselrichters gegen das Bezugspotential, insbesondere Masse (Ground), der Versorgungsspannung geführt wird. Hierzu weist die Trennschaltung zweckmäßigerweise zwei seriell geschaltete und mittels der Steuer- bzw. Regeleinrichtung ansteuerbare Halbleiterschalter auf, zwischen denen ein Mittenabgriff gebildet ist, der an die Steuer- bzw. Regeleinrichtung geführt ist.

Den Halbleiterschaltern der Trennschaltung ist zweckmäßigerweise ein Spannungsteiler parallel geschaltet, dessen Mitten-, Teiler- oder Pegelabgriff ebenfalls an die Steuer- bzw. Regeleinrichtung geführt ist. Der Mittenabgriff des Spannungsteilers ist vorzugsweise mit dem Abgriff zwischen den beiden Halbleiterschaltern verbunden. Eine zusätzliche Detektions- oder Sensorverbindung zur Steuer- bzw. Regeleinrichtung ist daher eingespart.

Im Zuge der Unterbrechung der über die Schaltzweige der Verbindungs- und Trennschaltung hergestellten Verbindung zwischen der Versorgungsspannung und dem Spannungsanschluss des Antriebswechselrichters erzeugt die Steuer- bzw. Regeleinrichtung ein Steuersignal für die Trennschaltung, um den Spannungsanschluss des Antriebswechselrichters an das Bezugspotential der Versorgungsspannung zu führen.

Bei von der Versorgungsspannung getrenntem Spannungsanschluss erfasst die Steuer- bzw. Regeleinrichtung in einem zweiten Prüfmodus die Spannung bzw. den Spannungspegel am Abgriff zwischen den Halbleiterschaltern. Die Auswertung dieses Spannungspegels erfolgt stets dann, wenn ein erster der beiden Halbleiterschalter der Trennschaltung eingeschaltet und der zweite Halbleiterschalter ausgeschaltet oder umgekehrt, wenn der zweite der beiden Halbleiterschalter der Trennschaltung eingeschaltet und der erste Halbleiterschalter ausgeschaltet ist. Nimmt in diesem zweiten Prüfmodus - je nach Schaltzustand der beiden Halbleiterschalter der Trennschaltung - der Spannungspegel am Abgriff der Halbleiterschalter den Pegel am Spannungsanschluss des Antriebswechselrichters bzw. den Pegel nahe des Bezugspotentials der Versorgungsspannung an, so ist von einer sicheren Funktionsfähigkeit der Verbindungsschaltung auszugehen. Eine weitergehende Prüfung erfolgt durch Detektion des Spannungspegels am Mittenabgriff des Spannungsteilers, wenn beide Halbleiterschalter der Verbindungsschaltung ausgeschaltet sind.

Die Funktionsprüfung im zweiten Prüfmodus dient der Sicherstellung einer zuverlässigen Verbindung des Spannungsanschlusses des Antriebswechselrichters mit dem Bezugspotential der Versorgungsspannung, wenn beispielsweise in Folge der Auslösung einer Sicherheitsfunktion eine zuverlässige Trennung des Antriebswechselrichters von der Versorgungsspannung zu gewährleisten ist, um demzufolge ein Stillsetzen der elektrischen Maschine zuverlässig sicherzustellen. Ebenso wie im ersten Prüfmodus kann auch im zweiten Prüfmodus die Funktionsfähigkeit der sicheren Abschaltung des Antriebswechselrichters während dessen Betriebs getestet werden.

Aufgrund einer redundanten Ausführung sowohl der Verbindungs- und Unterbrechungsschaltung als auch der Trennschaltung zwischen dem Anschluss des Antriebswechselrichters und dem Bezugspotential der Versorgungsspannung kann bei der Diagnose eines Fehlers eines der entsprechenden Prüfkanäle der andere redundante Prüfkanal noch eine sichere Abschaltung und Trennung des Antriebswechselrichters herstellen. Somit kann auch im Fehlerfall eines der redundanten Prüfkanäle die andere redundante Schaltung, d. h. der andere Prüfkanal allein die elektrische Maschine und somit den Antrieb momentenfrei schalten. Geeigneterweise sind hierzu die beiden redundanten Schaltungen bzw. Prüfkanäle auf geeignete Art miteinander verknüpft, um bei einer Diagnose eines Fehlers in einer der Schaltungen mittels der redundanten anderen Schaltung die sichere Abschaltung und Anschlusstrennung durchzuführen.

Die erfindungsgemäße Vorrichtung ermöglicht somit eine zuverlässige Prüfung, ob mittels der Verbindungs- und Trennschaltungen eine zuverlässige Abschaltung und Trennung des Spannungsanschlusses des Antriebswechselrichters von der Versorgungsspannung sichergestellt ist, ohne probeweise abschalten zu müssen. Solange die Prüfung der Verbindungs- und Trennschaltung einerseits sowie der Trennschaltung zwischen dem Spannungsanschluss des Antriebswechselrichters und dem Bezugspotential der Versorgungsspannung fehlerfrei funktionieren, ist davon auszugehen, dass der Antriebswechselrichter von der Versorgungsspannung getrennt und somit sicher abgeschaltet werden kann, wenn dies gewünscht oder aus Sicherheitsgründen erforderlich ist.

In einer weiteren zweckmäßigen Weiterbildung der Vorrichtung weist diese eine, insbesondere wiederum redundant ausgeführte, Wandlerschaltung auf, die einen Transformator mit primärseitig einem Halbleiterschalter zur Bereitstellung einer potentialgetrennten Ausgangsspannung aus einer Eingangsspannung sowie sekundärseitig einen Gleichrichter umfasst. Diesem ist die Steuer- bzw. Regeleinrichtung nachgeschaltet, wobei die, insbesondere ebenfalls redundant ausgeführte, Steuer- bzw. Regeleinrichtung schaltungs- und/oder programmtechnisch dazu eingerichtet ist, ein Steuersignal für den Antriebswechselrichter zur Auslösung einer Sicherheitsfunktion und ein Ansteuersignal für den Halbleiterschalter zu erzeugen, wenn die Ausgangsspannung einen Maximalwert überschreitet.

Dabei wird aus einer Eingangsgleichspannung eine potentialgetrennte Ausgangsgleichspannung und aus dieser ein Steuersignal für den Antriebswechselrichter zu dessen bestimmungsgemäßen Betrieb und zur Auslösung der Sicherheitsfunktion erzeugt. Zudem wird ein Ansteuersignal für den periodisch an die Eingangsspannung geschalteten Halbleiterschalter erzeugt und die Ausgangsspannung reduziert oder begrenzt, wenn die Ausgangsspannung eine Schaltschwelle oder einen Schwellwert überschreitet.

Diesbezüglich geht die Erfindung von der Überlegung aus, dass zur Beherrschung auch eines relativ großen Spannungsbereichs der Eingangsspannung von größer oder gleich 60V zwar in einfachster Art und Weise eine Spannungsteilerschaltung, eventuell mit nachgeschaltetem Optokoppler zur galvanischen Trennung, eingesetzt werden könnte. Nachteilig bei derart hohen Eingangsspannungen ist jedoch die entsprechend hohe Verlustleistung an den ohmschen Widerständen des Spannungsteilers. Auch der Einsatz einer Konstantstromquelle mit eventuell nachgeschaltetem Optokoppler führt zu unerwünscht hohen Verlustleistungen bei einer entsprechend hohen Eingangsspannung in Höhe der geforderten 60V. Auch könnten bekannte Schaltungen zur Spannungsbegrenzung verwendet werden, um im Fehlerfall auftretende Spannungserhöhungen auf die 24V-Eingangsspannung zu begrenzen. Mit derartigen Spannungsbegrenzungsschaltungen ist jedoch nicht sichergestellt, dass die geforderte Sicherheitsfunktion unbeeinflusst gewährleistet und eine unerwünschte Abschaltung der Eingangsspannung zuverlässig verhindert ist.

Demgegenüber ist die erfindungsgemäß weitergebildete Vorrichtung dazu vorgesehen und eingerichtet, einen Betriebsfall mit einer erhöhten Eingangsspannung von beispielsweise 60V auch für einen Digitaleingang einer nachfolgenden Steuerschaltung für den Antriebswechselrichter bei gleichzeitig geringer Verlustleistung zuzulassen und die geforderte Sicherheitsfunktion, insbesondere die STO-Funktion, zuverlässig zu gewährleisten.

Die Wandlerschaltung ist hierbei schaltungstechnisch nach Art eines getakteten Spannungswandlers ausgeführt, der beispielsweise als Sperrwandler oder auch als Flusswandler arbeitet und die Eingangsgleichspannung, die im Normalfall 24V beträgt, in eine Ausgangsgleichspannung umwandelt, die einer Einrichtung zur Erzeugung eines Steuersignals für den Frequenzumrichter bereitgestellt ist.

Die dem Gleichrichter nachgeschaltete Steuer- bzw. Regeleinrichtung ist zudem schaltungs- und/oder programmtechnisch dazu eingerichtet, ein getaktetes Ansteuersignal für den Halbleiterschalter der Wandlerschaltung zu erzeugen, wenn die Eingangsspannung und damit die Ausgangsspannung der Einrichtung einen vorgegebenen Maximalwert überschreitet. Infolge des Ansteuersignals wird die Ausgangsspannung, falls diese den Maximalwert überschreitet, steuer- oder reglungstechnisch begrenzt. Hierzu ist die Einrichtung über eine Rückführschleife, vorzugsweise mit galvanisch trennendem Element in Form insbesondere eines Optokopplers, mit dem Halbleiterschalter ansteuerseitig verbunden. Die Rückführschleife umfasst zweckmäßigerweise einen Pulsmodulator zur Einstellung der Arbeitsfrequenz des Halbleiterschalters anhand des von der Einrichtung erzeugten Takt- oder Ansteuersignals. Der Pulsmodulator ist dabei geeigneterweise ein Pulsweitenmodulator (PWM) und/oder ein Puls-Pausen-Modulator (PPM) zur Einstellung des Tastgrades des Takt- oder Ansteuersignals für den Halbleiterschalter.

Die Steuer- und/oder Regeleinrichtung weist vorzugsweise eine mit der Ausgangsspannung der Wandlerschaltung beaufschlagte Komparator- und Schwellwertschalterfunktion zur Aktivierung des Ansteuersignals für den Halbleiterschalter auf. Des Weiteren umfasst die Steuer- bzw. Regeleinrichtung geeigneterweise einen Soll-Ist-Vergleicher und einen diesem nachgeschalteten Pulsmodulator zur Einstellung der Arbeitsfrequenz des Halbleiterschalters anhand einer Abweichung der Ausgangsspannung von einem Sollwert.

In einer zweckmäßigen Ausgestaltung dieser Vorrichtung ist der Steuer- und/oder Regeleinrichtung ein Schwellwertschalter zugeordnet, dem die Ausgangsspannung der Wandlerschaltung zur Erzeugung eines binären Steuersignals für den Antriebswechselrichter zugeführt ist. Der Schwellwertschalter ist geeigneterweise softwaretechnisch, z. B. als Schmitt-Trigger-Funktionalität, realisiert. Das Steuersignal führt vorzugsweise einen High-Pegel zum Betrieb des Antriebswechselrichters, wenn die Ausgangsspannung einen oberen Schwellwert überschreitet, und einen die Sicherheitsfunktion auslösenden Low-Pegel, wenn die Ausgangsspannung einen unteren Schwellwert unterschreitet.

Zweckmäßigerweise ist die Wandlerschaltung ebenso wie die Steuer- und/oder Regeleinrichtung redundant ausgeführt. Zudem ist geeigneterweise die Funktionalität der Steuer- und/oder Regeleinrichtung, insbesondere inklusive deren Komparator- und Schwellwertschalterfunktion, in zwei redundante Mikroprozessoren integriert, deren Eingänge für die Ausgangsspannung der Wandlerschaltung mit dem jeweils anderen Mikroprozessors gekoppelt sind.

Besonders bevorzugt ist der Halbleiterschalter des Wandlers steuerseitig über ein galvanisch trennendes Element in Form eines Optokopplers mit der Steuer- bzw. Regeleinrichtung verbunden. In einer besonders bevorzugten Variante der Wandlerschaltung bildet der oder bei redundanter Ausführung jeder Halbleiterschalter mit der Primärwicklung des Transformators eine Reihenschaltung, an der die Eingangsspannung anliegt. Der Reihenschaltung ist geeigneterweise ein Kondensator zur Pufferung der üblicherweise zumindest geringfügig schwankenden Eingangsspannung parallel geschaltet. An diesen Pufferkondensator ist zweckmäßigerweise der Steuereingang (Gate) des vorzugsweise als MOSFET ausgeführten Halbleiterschaler über den Fototransistor des galvanisch trennenden Optokopplers angeschlossen.

Die mit dieser weitergebildeten Vorrichtung erzielten Vorteile bestehen insbesondere darin, dass unter Verwendung einer Wandlerschaltung zur Steuerung einer Sicherheitsfunktion einer elektrischen Maschine ein vergleichsweise großer oder weiter Eingangsspannungsbereich von mehr als 60V sicher und dabei insbesondere hinsichtlich der erfindungsgemäßen Vorrichtung eigensicher sowie bei nur geringer Verlustleistung beherrscht ist. Aufgrund des redundanten Aufbaus der Wandlerschaltung und der Einrichtung zur Auslösung der Sicherheitsfunktion, insbesondere der STO-Funktion, sowie deren gegenseitiger Überwachung ist die Sicherheit und Eigensicherheit der erfindungsgemäßen Vorrichtung weiter erhöht.

Nachfolgend werden Ausführungsbeispiele der Erfindung anhand einer Zeichnung näher erläutert. Darin zeigen:
- Fig. 1: schematisch in einem Blockschaltbild eine Antriebssteuerung einer elektrischen Maschine mit einer Vorrichtung zur spannungsmäßigen Verbindung und Trennung eines Antriebswechselrichter der elektrischen Maschine mit bzw. von einer Versorgungsspannung, und
- Fig. 2: eine Verbindungs- und Trennschaltung der Vorrichtung in redundanter Ausführung,
- Fig. 3: schematisch in einem Blockschaltbild die Antriebssteuerung mit eingangsseitiger Wandlerschaltung zur Auslösung einer Sicherheitsfunktion sowie zur Spannungsbegrenzung, und
- Fig. 4: den schaltungstechnischen redundanten Aufbau der Wandlerschaltung mit nachgeschalteter Einrichtung zur Auslösung der Sicherheitsfunktion mit gegenseitiger Überwachung.

Einander entsprechende Teile sind in allen Figuren mit den gleichen Bezugszeichen versehen.

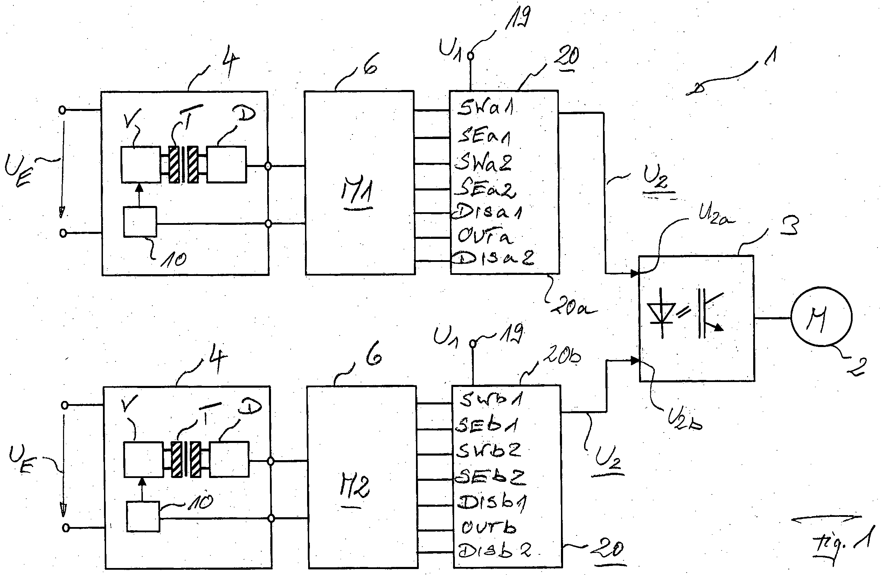

Fig. 1 zeigt eine Antriebssteuerung 1 eines Drehstrommotors 2 als elektrische Maschine, der bzw. die mittels eines Antriebs- oder Frequenzumrichters 3 betrieben ist. Die Antriebssteuerung 1 umfasst in redundanter Ausführung eine getaktete Wandlerschaltung 4 mit einem Transformator T, dem primärseitig ein Halbleiterschalter V vorgeschaltet und sekundärseitig ein Gleichrichter D nachgeschaltet ist. Die Antriebssteuerung 1 umfasst zudem eine wiederum redundant ausgeführte Steuer- und Regeleinrichtung 6, die in Verbindung mit einer Verbindungs- und Unterbrechungsschaltung 20 eine Vorrichtung zur Verbindung und sicheren Trennung eines Spannungsanschlusses U₂ des Antriebswechselrichters 3 mit bzw. von einer Versorgungsspannung U₁ bildet. Die Verbindungs- und Unterbrechungsschaltung 20 ist ebenfalls redundant ausgeführt und weist hierzu zwei Prüfkanäle 20a und 20b auf. Die Verbindungs- und Unterbrechungsschaltung 20 bzw. deren beiden Prüfkanäle 20a und 20b weisen jeweils Eingänge SWa1, SWa2, DISa1 und DISa2 bzw. SWb1, SWb2, DISb1 und DISb2 auf. Zudem weist die Verbindungs- und Unterbrechungsschaltung 20 bzw. deren beiden Prüfkanäle 20a und 20b jeweils Ausgänge SEa1, SEa2 und OUTa bzw. SEb1, SEb2 und OUTb auf.

Der Prüfkanal 20a ist ausgangsseitig mit einer ersten Anschlussseite U₂ₐ, nämlich der sogenannten High-Side des mit Optokopplern und Leistungshalbleitern vorzugsweise in B6-Brückenschaltung ausgeführten Antriebswechselrichters 3 verbunden. Analog ist der zweite Prüfkanal 20b der Versorgungs- und Trennschaltung 20 ausgangsseitig mit der zweiten Anschlussseite U_{2b}, nämlich der Low-Side des Antriebswechselrichters 3 verbunden.

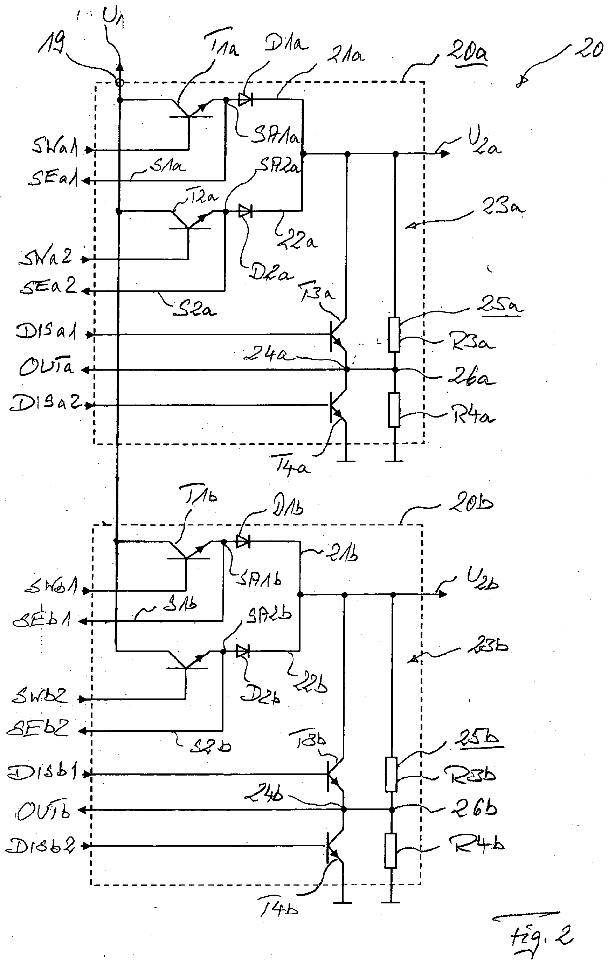

Fig. 2 zeigt die zweikanalige Verbindungs- und Trennschaltung 20 in dessen bevorzugter schaltungstechnischer Ausführung. Die beiden Prüfkanäle 20a und 20b sind schaltungstechnisch gleichermaßen aufgebaut, so dass nachfolgend die jeweilige Schaltung und deren Funktionalität am Beispiel des ersten Prüfkanals, 20a beschrieben wird. Der gleich aufgebaute zweite Prüfkanal 20b enthält für die einzelnen Schaltungsteile den zusätzlichen Buchstaben b anstelle des Buchstaben a der Schaltungsteile des näher beschriebenen ersten Prüfkanals 20a.

Jeder der Prüfkanäle 20a, 20b weist zwei gleichermaßen aufgebaute Schaltzweige 21 a, 22a auf, die gemeinsam einerseits an die Versorgungsspannung U₁ bzw. einen entsprechenden Anschluss 19 und andererseits an den mit U₂ₐ, U_{2b} bezeichneten Spannungsanschluss des Antriebswechselrichters 3 angeschlossen und somit zwischen die Versorgungsspannung U₁ und den entsprechenden Spannungsanschluss U₂ₐ bzw. U_{2b} des Antriebswechselrichters 3 geschaltet sind. Die Schaltzweige 21a und 22a weisen jeweils eine Reihenschaltung mit einem Halbleiterschalter T1 a, T2a und einer Diode D1 a bzw. D2a auf. Zwischen dem jeweiligen Halbleiterschalter T1 a, T2a und der Diode D1 a, D2a ist ein Sensorabgriff SA1a bzw. SA2a vorgesehen, der an den jeweiligen Ausgang SEa1 bzw. SEa2 des entsprechenden Prüfkanals 20a geführt ist. Die Eingänge SWa1 und SWa2 sind an die Steuereingänge bzw. -anschlüsse des jeweiligen Halbleiterschalters T1a bzw. T2a geführt. Der jeweilige Prüfkanal 20a, 20b weist des Weiteren eine Trennschaltung 23a bzw. 23b auf. Die Trennschaltung 23a, 23b ist zwischen den Spannungsanschluss U₂ₐ bzw. U_{2b} des Antriebswechselrichters 3 und das Bezugspotential (Masse oder Ground) der Versorgungsspannung U₁ geschaltet.

Die nachfolgend wiederum lediglich anhand des ersten Prüfkanals 20a beschriebene Trennschaltung 23a ist im zweiten Prüfkanal 20b gleichartig ausgeführt und dort hinsichtlich der Schaltungsbestandteile wiederum mit dem Buchstaben b versehen.

Die Trennschaltung 23a umfasst eine Reihenschaltung aus zwei Halbleiterschaltern T3a, denen ein Mittenabgriff 24a zugeordnet ist, der an den Ausgang OUTa des entsprechenden Prüfkanals 20a der Verbindungs- und Unterbrechungsschaltung 20 geführt ist. Die Trennschaltung 23a umfasst des Weiteren einen Spannungsteiler 25a, der den seriell geschalteten Halbleiterschaltern T3a, T4a parallel geschaltet ist. Der Spannungsteiler 25a umfasst zwei ohmsche Widerstände R3a, R4a mit zugeordnetem Teiler- oder Potentialabgriff 26a. Dieser ist mit dem Mittenabgriff 24a verbunden und somit ebenfalls an den Ausgang OUTa des entsprechenden Prüfkanals 20a geführt. Die beiden Halbleiterschalter T3a, T4a sind ansteuerseitig mit den Eingängen DISa1 bzw. DISa2 des entsprechenden Prüfkanals 20a verbunden.

In einem ersten Prüfmodus werden - bevorzugt wechselweise - die Halbleiterschalter T1a und T2a in den sperrenden Zustand mittels der Steuer- bzw. Regeleinrichtung 6 gesteuert, so dass der entsprechende Schaltzweig 21 a bzw. 22a abgeschaltet ist. In diesem Zustand liest die Steuer- bzw. Regeleinrichtung 6 ein Sensorsignal S1 a, S2a aus, das den jeweiligen Spannungspegel am entsprechenden Sensorabgriff SA1 a bzw. SA2a angibt. Ist bei in den Sperrzustand gesteuertem Transistor T1 a, T2a und damit im jeweils abgeschalteten Schaltzweig 21 a bzw. 22a der erfasste oder sensierte Spannungspegel gleich Null, also insbesondere 0V, so wird von der Funktionsfähigkeit und -sicherheit des entsprechenden Schaltzweiges 21 a, 22a des jeweiligen Prüfkanals 22a ausgegangen.

Während des ersten Prüfmodus ist im jeweils anderen Schaltzweig 22a, 21 a der entsprechende Halbleiterschalter T2a bzw. T1 a durch entsprechende Ansteuerung mittels der Steuer- bzw. Regeleinrichtung 6 leitend geschaltet, der entsprechende Schaltzweig 22a, 21 a also eingeschaltet. Somit ist während des ersten Prüfmodus der Spannungsanschluss U₂ bzw. die entsprechende Anschlussseite U₂ₐ, U_{2b} (High- bzw. Low-Side) des Antriebswechselrichters 3 mit der Versorgungsspannung U₁ verbunden.

Der erste Prüfmodus kann somit im laufenden Betrieb der elektrischen Maschine 2 erfolgen. Zudem kann der erste Prüfmodus zyklisch in praktisch beliebigen Zeitabständen durchgeführt werden, wobei die jeweiligen Schaltzweige 21a, 22a und 21 b, 22b der beiden Prüfkanäle 20a bzw. 20b wechselweise ein- und ausgeschaltet werden.

In einem zweiten Prüfmodus wird die Funktionsfähigkeit und Funktionssicherheit der Verbindungs- und Unterbrechungsschaltung 20 dahingehend geprüft, ob nach erfolgter Unterbrechung der Verbindung zwischen dem Spannungsanschluss U₂ des Antriebswechselrichters 3 und der Versorgungsspannung U₁ ein funktionssicherer Anschluss bzw. eine funktionssichere Verbindung des Spannungsanschlusses U₂ des Antriebswechselrichters 3 an das Bezugspotential (Masse oder Ground) der Versorgungsspannung U₁ zuverlässig und fehlerfrei gewährleistet ist.

Die Unterbrechung dieser Anschlussverbindung U₁, U₂ erfolgt durch entsprechende Ansteuerung der Halbleiterschalter T1 a, T2a beider Prüfkanäle 20a, 20b mittels der Steuer- bzw. Regeleinrichtung 6 über die entsprechenden Eingänge SWa1, SWa2 der Verbindungs- und Trennschaltung 20. Hierbei wird mittels der Steuer- bzw. Regeleinrichtung 6 über die Eingänge DISa1, DISa2 der Verbindungs- und Trennschaltung 20 gleichzeitig oder wechselweise in beiden Prüfkanälen 20a, 20b wiederum vorzugsweise zyklisch mit ebenfalls praktisch beliebigen Zykluszeiten der Halbleiterschalter T3a der Trennschaltung 23a leitend und somit eingeschaltet, wenn der seriell nachgeordnete Halbleiterschalter T4a sperrend und somit ausgeschaltet ist. In diesem Zustand wird der Spannungspegel am Mittenabgriff 24a über den Ausgang OUTa abgefragt. Hat der Pegel am Mittenabgriff 24a den Spannungspegel des Spannungsanschlusses U₂ angenommen, so wird von der sicheren Funktionsfähigkeit ausgegangen.

Anschließend wird der Halbleiterschalter T4a in den leitenden Zustand und somit eingeschaltet, während der seriell vorgeordnete Halbleiterschalter T3a in den sperrenden Zustand und somit ausgeschaltet wird. Wird am Mittenabgriff 24a in diesem Schaltzustand der Halbleiterschalter T3a, T4a ein Pegel nahe des Bezugspotentials (Masse der Ground) der Versorgungsspannung U₁ detektiert, so ist wiederum von der Funktionssicherheit auch der Trennschaltung 23a auszugehen.

Nimmt in einem weiteren Test innerhalb des zweiten Prüfmodus bei ausgeschaltetem Zustand beider Halbleiterschalter T3a, T4a das über den Ausgang OUTa detektierte Signal einen Pegel an, der durch die Widerstände R3a, R4a vorgegeben ist, so wird die Funktionsfähigkeit der Trennschaltung 23a zusätzlich verifiziert.

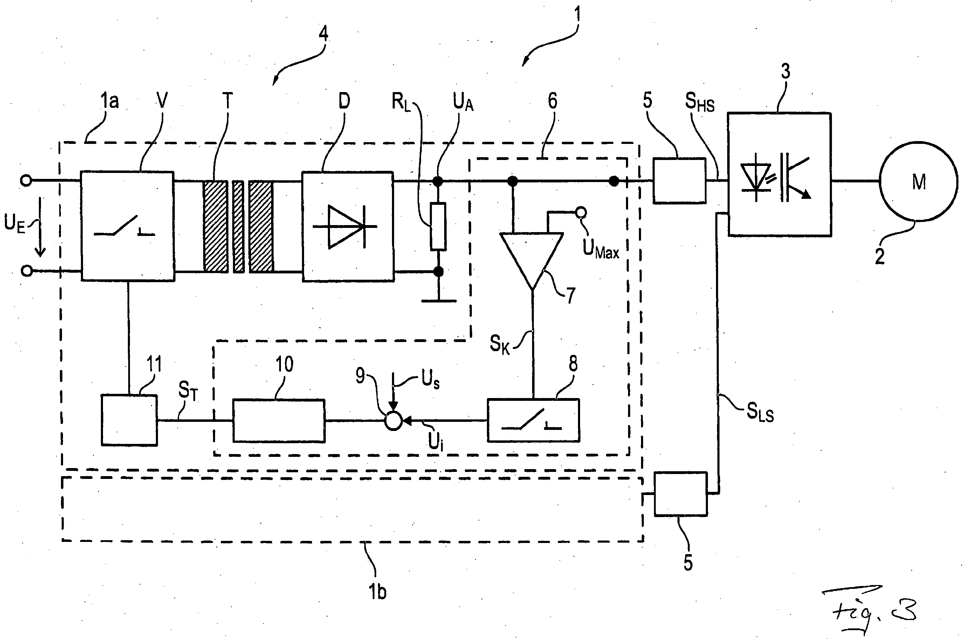

Fig. 3 zeigt die Antriebssteuerung 1 inklusive einer Sicherheitsfunktion, insbesondere der Safe-Torque-Off-Funktion (STO), des Drehstrommotors 2 als elektrische Maschine, der mittels des Antriebswechselrichters 3 betrieben ist. Gezeigt ist wiederum die getaktete Wandlerschaltung 4 mit dem Transformator T und primärseitigem Halbleiterschalter V sowie sekundärseitigem Gleichrichter D. Die Wandlerschaltung 4 wandelt eine Eingangsgleichspannung U_{E} in eine Ausgangsgleichspannung U_{A} um, die an einem gegen Masse oder Bezugspotential geschalteten Lastwiderstand R_{L} abgreifbar ist. Die Spannungsumwandlung oder -umsetzung erfolgt mittels des mit einer bestimmten Schalt- oder Arbeitsfrequenz angesteuerten elektronischen Halbleiterschalters V sowie mittels des Transformators T zur potentialgetrennten Energieübertragung und mittels des Gleichrichters D zur Auskopplung der Ausgangsgleichspannung U_{A}.

Der Transformator T kann hierbei als Energiespeicher eines getakteten Sperrwandlers mit galvanischer Trennung zwischen dem Wandlereingang und dem Wandlerausgang oder auch als galvanisch trennendes Bauteil eines sogenannten Flusswandlers arbeiten. Bei beiden Wandlervarianten wird der Halbleiterschalter V regelmäßig gesteuert geöffnet, so dass sich das magnetische Feld im Transformator T abbauen kann. Die Eingangsspannung kann beispielsweise U_{E} = 3V bis U_{E} = 60V betragen.

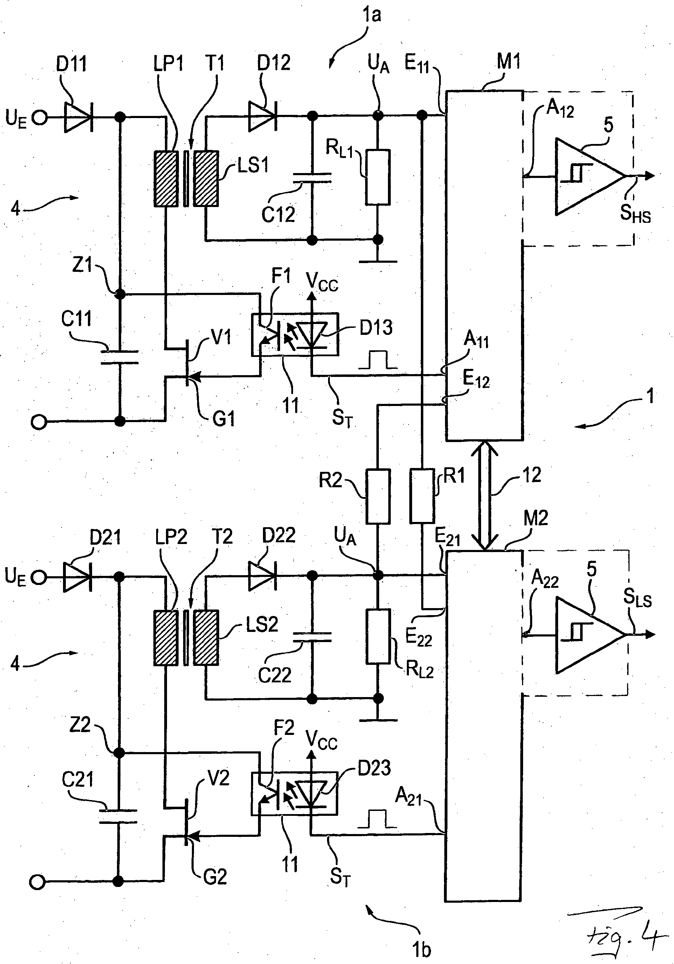

Die Ausgangsspannung U_{A} wird an einen Schwellwertschalter 5 in Form vorzugsweise eines Schmitt-Triggers geführt, der ein binäres Steuersignal für den Antriebswechselrichter 3 erzeugt. Diese Schalterfunktion bzw. Schmitt-Trigger-Funktionalität ist vorzugsweise softwaretechnisch (oder als Algorithmus) realisiert und in den nachfolgend anhand der Fig. 4 erläuterten Mikroprozessor M1, M2 integriert. Übersteigt die Ausgangsspannung U_{A} einen oberen Schwellwert U₁, beispielsweise U₁ = 11V, so liefert der Schwellwertschalter 5 ein binäres Steuersignal S_{HS} mit einem High-Pegel, so dass der dem Schwellwertschalter 5 nachgeschaltete Antriebswechselrichter 3 den Drehstrommotor 2 bestimmungsgemäß ansteuert. Unterschreitet die Ausgangsspannung U_{A} einen unteren Schwellwert U₂, beispielsweise U₂ = 5V, so erzeugt der Schwellwertschalter 5 als binäres Steuersignal S_{HS} einen Low-Pegel, der die Sicherheitsfunktion, insbesondere die sichere Drehmomentabschaltung (Safe-Torque-Off), und somit den sicheren Halt des Drehstrommotors 2 auslöst.

Die Steuer- und/oder Regeleinrichtung 6 führt die mittels der Wandlerschaltung 4 erzeugte Ausgangsspannung U_{A} an den Schwellwertschalter 5 zur Steuerung des Antriebswechselrichter 3, wobei die Ausgangsspannung U_{A} in das binäre oder digitale Steuersignal S_{HS}, S_{LS} konvertiert wird. Das Steuersignal S_{HS} aktiviert oder deaktiviert je nach High- oder Low-Pegel die High-Side (HS) der üblicherweise aus Leistungshalbleitern (Leistungs- oder Leistungshalbleiterschaltern), insbesondere IGBT's, aufgebauten Brückenschaltung des Antriebswechselrichter 3, um dessen bestimmungsgemäßen Betrieb zu signalisieren bzw. die Sicherheitsfunktion auszulösen.

Ein gleichermaßen erzeugtes Steuersignal S_{LS}, dass wiederum mittels eines Schwellwertschalters 5 in ein binäres Steuersignal S_{LS} umgewandelt wird, steuert (aktiviert oder deaktiviert) analog die Low-Side (LS) der Brückenschaltung des Antriebswechselrichter 3. Hierzu sind zwei gleichartig aufgebaute Steuermodule 1a, 1 b vorgesehen, die nachfolgend auch als High-Side- oder HS-Steuermodul 1a bzw. Low-Side- oder LS-Steuermodul 1b bezeichnet werden.

Die Steuer- bzw. Regeleinrichtung 6 kann einen Schwellwertschalter 7 in Form eines Komparators aufweisen, dem eingangsseitig die Ausgangsspannung U_{A} der Wandlerschaltung 4 zugeführt ist. Der Komparator 7 vergleicht die Ausgangsspannung U_{A} mit einem Maximalwert U_{Max}, der beispielsweise U_{Max} = 60V beträgt. Wird dieser Maximalwert U_{Max} überschritten, so erzeugt der Komparator 7 ausgangsseitig ein Steuer- oder Schaltsignal S_{K}, infolge dessen ein beispielsweise wiederum durch einen Halbleiterschalter oder dergleichen realisierter Schalter 8 die Ausgangsspannung U_{A} an einen Soll-Ist-Vergleicher 9 führt. Diese Funktionalität kann durch die Vorgabe oder Einstellung eines festen Tastverhältnisses substituiert und/oder ergänzt werden.

Bei einer Abweichung des Istwertes Uᵢ der Ausgangsspannung U_{A} von einem Sollwert Uₛ, der beispielsweise der Eingangsspannung U_{E} = Uₛ = 24V beträgt, erzeugt ein Regler 10, vorzugsweise ein PWM-Regler, ein Taktsignal S_{T} zur modifizierten Ansteuerung des Halbleiterschalters V. Die Ansteuerung des Halbleiterschalters V erfolgt dabei über ein galvanisch trennendes Element 11, vorzugsweise in Form eines Optokopplers. Mittels des Reglers 10 wird der Tastgrad der Pulsmodulation, beispielsweise einer Pulsweitenmodulation (PWM) und/oder einer Puls-Pausen-Modulation (PPM), derart eingestellt, dass die Ausgangsspannung U_{A} auf den Sollwert Uₛ eingestellt bzw. reduziert wird.

Der Transformator T wird primärseitig mittels des Halbleiterschalters V periodisch mit der Eingangsspannung U_{E} verbunden und hierzu mit einer bestimmten, konstanten Takt- oder Arbeitsfrequenz betrieben, solange die Ausgangsspannung U_{A} die vorgegebene Maximalspannung U_{Max} unterschreitet. Erst bei Überschreiten dieser Maximalspannung U_{Max} setzt die Steuerung bzw. Regelung über den Schwellwertschalter oder Komparator 7 ein, so dass durch Änderung der Takt- bzw. Arbeitsfrequenz des Halbleiterschalters V die Energieübertragung über den Transformator T verringert und die Ausgangsspannung U_{A} auf die vorgegebene Sollspannung U_{S} geregelt oder gesteuert wird. Mittels der Steuer- bzw. Regeleinrichtung 6 und der Wandlerschaltung 4 ist somit ein sicherer Betrieb auch bei einer vergleichsweise hohen Eingangsspannung U_{E} von größer oder gleich 60V ohne Beeinträchtigung der geforderten Sicherheitsfunktion der elektrischen Maschine 2 gegeben.

Fig. 4 zeigt einen bevorzugten Aufbau der Wandlerschaltung 4. Dieser ist ausgangsseitig an einen Eingang E₁₁ eines Mikroprozessors M1 geführt, in welchem die Funktionalität des Komparators 7 und des Schalters 8 sowie des Vergleichers 9 und des Reglers 10 programmtechnisch realisiert ist. Der Mikroprozessor M1 bildet zusammen mit der vorgeordneten Wandlerschaltung 4 das erste oder HS-Steuermodul 1a der Vorrichtung 1.

Das zweite oder LS-Steuermodul 1 b ist analog aufgebaut und weist wiederum eine redundante, gleichartige Wandlerschaltung 4 und einen entsprechend redundanten Mikroprozessor M2 zur Realisierung der Funktionalität der Steuer- bzw. Regeleinrichtung 6 auf. Über Ausgänge A₁₂, A₂₂ sind die redundanten Mikroprozessoren M1 und M2 zum jeweiligen Schmitt-Trigger 5 geführt, die ihrerseits die binären Steuersignale S_{HS} bzw. S_{LS} am Antriebswechselrichter 3 unter Gewährleistung der Sicherheitsfunktion der elektrischen Maschine 2 bereitstellen. Wie bereits erwähnt, ist vorzugsweise die Funktionalität der Schwellwertschalter (Schmitt-Trigger) 5 softwaretechnisch in die Mikroprozessoren M1, M2 integriert.

Die Mikroprozessoren M1, M2 sind miteinander über Widerstände R1 bzw. R2 gekoppelt. Weitere Kopplungen der Mikroprozessoren M1 und M2 sind durch den Pfeil 12 angedeutet, der einen Daten- oder Informationsaustausch zwischen den Mikroprozessoren M1, M2 symbolisiert. Zur Kopplung der Mikroprozessoren M1, M2 sind deren Eingänge E₁₁, E₂₁, über welche die Ausgangsspannung U_{A} der Wandlerschaltung 4 zugeführt wird, mittels der Widerstände R1, R2 zu jeweils einem weiteren Eingang E₁₂, E₂₂ der Mikroprozessoren M1 bzw. M2 geführt.

Bei den gleichartig aufgebauten Wandlerschaltungen 4 ist der Halbleiterschalter V1, V2 der jeweiligen Primärwicklung LP1, LP2 des Transformators T1 bzw. T2 seriell nachgeschaltet. Der vorzugsweise über eine Diode D11, D21 als Verpolschutz an die Eingangsspannung U_{E} angeschlossenen Reihenschaltung aus der jeweiligen Primärwicklung LP1, LP2 und dem Halbleiterschalter V1, V2 ist ein Pufferkondensator C11 bzw. C21 parallelgeschaltet. Der Sekundärspule LS1, LS2 des jeweiligen Transformators T1, T2 ist eine Gleichrichterdiode D12, D22 seriell nachgeschaltet sowie ein Glättungskondensator C12, C22 parallelgeschaltet, dem wiederum der Lastwiderstand R_{L1} bzw. R_{L2} parallel geschaltet ist.

In der Ausführungsform nach Fig. 4 ist die Steuer- und/oder Regeleinrichtung 6 durch eine in die Mikroprozessoren M1, M2 programmtechnisch integrierte Komparator- und Schwellwertschalter-Funktionalität realisiert. Der vorzugsweise als MOSFET ausgeführte Halbleiterschalter V1, V2 ist ansteuerseitig (gateseitig) über den Optokoppler 11 als galvanisch trennendes Element innerhalb der Rückführschleife an einen entsprechenden Taktausgang A₁₁, A₂₂ des jeweiligen Mikroprozessors M1 bzw. M2 geführt. Das erzeugte Taktsignal S_{T} ist - wie symbolisch dargestellt - ein Rechtecksignal, das die Leuchtdioden (LED) D13, D23 des Optokopplers 11 periodisch an eine Versorgungsspannung V_{CC} legt, so dass diese alternierend hell oder dunkel ist. Demzufolge wird der Fototransistor F1, F2 des jeweiligen Optokopplers 11 periodisch ein- oder ausgeschaltet und führt somit den Spannungspegel eines Abgriff Z1, Z2 des Pufferkondensators C11, C21 an den Steuereingang (Gate) G1, G2 des jeweiligen Halbleiterschalters V1 bzw. V2.

Demzufolge verbindet der jeweilige Halbleiterschalter V1, V2 die Primärspule LP1, LP2 des Transformators T1 bzw. T2 periodisch mit der Eingangsspannung U_{E}. In Abhängigkeit von der jeweils eingestellten Arbeitsfrequenz bzw. dem steuer- oder regelungstechnisch vorgegebenen Tastgrad wird sekundärseitig des Transformators T1, T2 hinter dem Gleichrichter D12, D22 am Kondensator C12, C22 und am Lastwiderstand R_{L1}, R_{L2} die Ausgangsspannung U_{A} eingestellt, die dem jeweiligen Mikroprozessor M1 bzw. M2 als Eingangsspannung zugeführt ist.

Die beschriebene Funktionalität der Schwellwertschaltung bei Erreichen oder Überschreiten des Maximalwertes U_{Max} der Ausgangsspannung U_{A} bzw. der Eingangsspannung U_{E} sowie die Funktionalität der Takterzeugung für den Halbleiterschalter V1, V2 ist in den Mikroprozessoren M1, M2 als Software oder Algorithmus installiert. Ebenso sind die Funktionalitäten zur Durchführung der beiden Prüfmodi der Verbindungs- und Unterbrechungsschaltung 20 in den Mikroprozessoren M1, M2 und somit in die Steuer- bzw. Regeleinrichtung 6 vorzugsweise programmtechnisch als Software oder Algorithmus installiert.

Aufgrund der Redundanz der beiden Steuermodule 1 a und 1 b sowie infolge deren Kopplung und gegenseitiger Überwachung erfolgt die Auslösung der Sicherheitsfunktion stets auch dann, wenn eines der Steuermodule 1a oder 1b eine Fehlfunktion ausführt oder vollständig ausfällt. Hierdurch ist ein hohes Maß an Eigensicherheit und damit insgesamt ein hoher Sicherheitsgrad der Antriebssteuerung 1 gewährleistet.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 1: Steuervorrichtung
- 1a: HS-Steuermodul
- 1b: LS-Steuermodul
- 2: Maschine/Drehstrommotor
- 3: Frequenzumrichter
- 4: Wandlerschaltung
- 5: Schwellwertschalter/Schmitt-Trigger
- 6: Steuer-/Regeleinrichtung
- 7: Schwellwertschalter/Komparator
- 8: Schalter
- 9: Soll-Ist-Vergleicher
- 10: PWM-Regler
- 11: Element/Optokoppler
- 12: Daten-Pfeil

- 19: Anschluss
- 20: Verbindungs-/Unterbrechungsschaltung
- 20a, b: Prüfkanal
- 21, 22: Schaltzweig
- 23: Trenn-/Erdungsschaltung
- 24: Mittenabgriff
- 25: Spannungsteiler
- 26: Teiler-/Potentialabgriff

- A₁₂ A₂₂: Ausgang
- C11 C21: Pufferkondensator
- C12, C22: Glättungskondensator
- D1,2: Diode
- D11, D21: Verpolschutz-Diode
- D12, D22: Gleichrichterdiode
- D13, D23: Leuchtdiode (LED)
- DIS1, 2: Eingang
- E₁₁, E₂₁: erster Eingang
- E₁₂, E₂₂: zweiter Eingang
- F1, F2: Phototransistor
- G1, G2: Steuereingang/Gate
- LP1, LP2: Primärwicklung
- LS1, LS2: Sekundärwicklung
- M1, M2: Mikroprozessor
- OUT: Ausgang
- R1, R2: Widerstand
- R3, R4: Widerstand
- R_{L1}, R_{L2}: Lastwiderstand
- SA1, 2: Sensorabgriff
- S1, 2: Sensorsignal
- SE1, 2: Ausgang
- SW1, 2: Eingang
- Sₖ: Steuer-/Schaltsignal
- S_{T}: Ansteuersignal
- S_{HS}: High-Side-Steuersignal
- S_{LS}: Low-Side-Steuersignal
- T₁, T₂: Transformator
- T1, 2: Halbleiterschalter
- T3,4: Halbleiterschalter
- U₁: Versorgungsspannung
- U₂: Spannungsanschluss
- U₂ₐ, b: Anschlussseite
- U_{A}: Ausgangsspannung
- U_{E}: Eingangsspannung
- Uᵢ: Istwert
- Uₛ: Sollwert
- U_{Max}: Maximalwert
- V₁, V₂: Halbleiterschalter
- Z₁, Z₂: Abgriff

## Patentansprüche

1. Vorrichtung zur Verbindung und sicheren Trennung eines Spannungsanschlusses (U₂) eines Antriebswechselrichters (3) für eine elektrische Maschine (2) mit bzw. von einer Versorgungsspannung (U₁),
- mit einer Verbindungs- und Unterbrechungsschaltung (20) mit zwei zwischen die Versorgungsspannung (U₁) bzw. dessen Anschluss (19) und den Spannungsanschluss (U₂) des Antriebswechselrichters (3) geschalteten Schaltzweigen (21, 22), und
- mit einer Steuer- und/oder Regeleinrichtung (6), die schaltungs- und/-oder programmtechnisch dazu eingerichtet ist, die Versorgungsspannung (U₁) über die Schaltzweige (21, 22) an den Spannungsanschluss (U₂) des Antriebswechselrichters (3) zu schalten sowie in einem ersten Prüfmodus einen der Schaltzweige (21, 22) abzuschalten und ein Sensorsignal (SE1, SE2) aus diesem Schaltzweige (21, 22) auszulesen, während der andere Schaltzweig (22, 21) eingeschaltet ist und die Versorgungsspannung (U₁) an den Spannungsanschluss (U₂) des Antriebswechselrichters (3) führt, **dadurch gekennzeichnet, dass**
- der Spannungsanschluss (U2) des Antriebswechselrichters (3) über eine ansteuerbare Trenn- oder Erdungsschaltung (23) gegen das Bezugspotential der Versorgungsspannung (U1) geführt ist.

2. Vorrichtung nach Anspruch 1,
**dadurch gekennzeichnet,**
**dass** die Schaltzweige (21, 22) einen Halbleiterschalter (T1, T2) aufweisen, der zwischen den Anschluss (19) für die Versorgungsspannung (U₁) und den Spannungsanschluss (U₂) des Antriebswechselrichters (3) sowie ansteuerseitig an die Steuer- bzw. Regeleinrichtung (6) geschaltet ist, und einen an die Steuer- bzw. Regeleinrichtung (6) geführten Sensorabgriff (SA1, SA2) aufweisen.

3. Vorrichtung nach Anspruch 2,
**dadurch gekennzeichnet,**
**dass** der Sensorabgriff (SA1, SA2) zwischen die Halbleiterschalter (T1, T2), insbesondere emitter- oder sourceseitig, und eine Diode (D1, D2) geführt ist.

4. Vorrichtung nach einem der Ansprüche 1 bis 3,
**gekennzeichnet durch**
eine redundante Verbindungs- und Unterbrechungsschaltung (20) mit zwei Prüfkanälen (20a, 20b), wobei ein erster Prüfkanal (20a) ausgangsseitig mit einer ersten Anschlussseite (U₂ₐ), insbesondere der High-Side, und ein zweiter Prüfkanal (20b) ausgangsseitig mit einer zweiten Anschlussseite (U_{2b}), insbesondere der Low-Side, des Spannungsanschlusses (U₂) des Antriebswechselrichters (3) verbunden ist.

5. Vorrichtung nach einem der Ansprüche 1 bis 4,
**dadurch gekennzeichnet,**
**dass** die Steuer- bzw. Regeleinrichtung (6) schaltungs- und/oder programmtechnisch dazu eingerichtet ist, die über die Schaltzweige (21, 22) hergestellte Verbindung zwischen der Versorgungsspannung (U₁) und dem Spannungsanschluss (U₂) des Antriebswechselrichters (3), insbesondere in Folge der Auslösung einer Sicherheitsfunktion, zu unterbrechen.

6. Vorrichtung nach einem der Ansprüche 1 bis 5,
**dadurch gekennzeichnet,**
**dass** die Trenn- oder Erdungsschaltung (23) zwei seriell geschaltete und mittels der Steuer- bzw. Regeleinrichtung (6) ansteuerbare Halbleiterschalter (T3, T4) mit einem an die Steuereinrichtung (6) geführten Mittenabgriff (24) umfasst.

7. Vorrichtung nach Anspruch 6,
**dadurch gekennzeichnet,**
**dass** die Trenn- oder Erdungsschaltung (23) einen den Halbleiterschaltern (T3, T4) parallel geschalteten Spannungsteiler (25) mit einem an die Steuer- bzw. Regeleinrichtung (6) geführten, insbesondere mit dem Mittenabgriff (24) der Halbleiterschalter (T3, T4) verbundenen, Potential- oder Spannungsabgriff (26) umfasst.

8. Vorrichtung nach einem der Ansprüche 1 bis 7,
**dadurch gekennzeichnet,**
**dass** die Steuer- bzw. Regeleinrichtung (6) im Zuge der Unterbrechung der über die Schaltzweige (21, 22) hergestellten Verbindung zwischen der Versorgungsspannung (U₁) und dem Spannungsanschluss (U₂) des Antriebswechselrichters (3) ein Steuersignal für die Trenn- oder Erdungsschaltung (23) erzeugt, so dass der Spannungsanschluss (U₂) des Antriebswechselrichters (3) an das Bezugspotential der Versorgungsspannung (U₁) geführt ist.

9. Vorrichtung nach einem der Ansprüche 1 bis 8,
**dadurch gekennzeichnet,**
**dass** bei von der Versorgungsspannung (U₁) getrenntem Spannungsanschluss (U₂) des Antriebswechselrichters (3) die Steuer- bzw. Regeleinrichtung (6) in einem zweiten Prüfmodus die Spannung am Mittenabgriff (24) der Halbleiterschalter (T3, T4) erfasst, wenn ein erster der beiden Halbleiterschalter (T3, T4) der Trenn- oder Erdungsschaltung (23) eingeschaltet und der zweite Halbleiterschalter (T3, T4) ausgeschaltet ist, und/oder wenn der zweite der beiden Halbleiterschalter (T3, T4) der Trenn- oder Erdungsschaltung (23) eingeschaltet und der erste Halbleiterschalter (T3, T4) ausgeschaltet ist.

10. Vorrichtung nach einem der Ansprüche 8 bis 10,
**dadurch gekennzeichnet,**
**dass** bei von der Versorgungsspannung (U₁) getrenntem Spannungsanschluss (U₂) des Antriebswechselrichters (3) die Steuer- bzw. Regeleinrichtung (6) im zweiten Prüfmodus die Spannung am Mittenabgriff (24) der Halbleiterschalter (T3, T4) oder am Potentialabgriff (26) des Spannungsteilers (25) erfasst, wenn beide Halbleiterschalter (T3, T4) der Trenn- oder Erdungsschaltung (23) ausgeschaltet sind.

11. Vorrichtung nach einem der Ansprüche 1 bis 10,
**gekennzeichnet durch**
eine, insbesondere redundant ausgeführte, Wandlerschaltung (4), die einen Transformator (T) mit primärseitig einem Halbleiterschalter (V) zur Bereitstellung einer potentialgetrennten Ausgangsspannung (U_{A}) aus einer Eingangsspannung (U_{E}) sowie sekundärseitig einen Gleichrichter (D) aufweist, dem die Steuer- bzw. Regeleinrichtung (6) nachgeschaltet ist, wobei die, insbesondere redundant ausgeführte, Steuer- bzw. Regeleinrichtung (6) schaltungs- und/oder programmtechnisch dazu eingerichtet ist, ein Steuersignal (S_{HS}, S_{LS}) für den Antriebswechselrichter (3) zur Auslösung der Sicherheitsfunktion und ein Ansteuersignal (S_{T}) für den Halbleiterschalter (V) zu erzeugen, wenn die Ausgangsspannung (U_{A}) einen Maximalwert (U_{Max}) überschreitet.

12. Vorrichtung nach Anspruch 11,
**gekennzeichnet durch**
dass die Steuer- bzw. Regeleinrichtung (6) eine mit der Ausgangsspannung (U_{A}) der Wandlerschaltung (4) beaufschlagte Komparator- und Schwellwertschalterfunktion (7, 8) zur Aktivierung des Ansteuersignals (S_{T}) für den Halbleiterschalter (V) aufweist.

13. Vorrichtung nach Anspruch 11 oder 12,
**dadurch gekennzeichnet,**
**dass** die Steuer- bzw. Regeleinrichtung (6) einen Soll-Ist-Vergleicher (9) und einen diesem nachgeschalteten Pulsmodulator (10) zur Einstellung der Arbeitsfrequenz des Halbleiterschalters (V) anhand einer Abweichung der Ausgangsspannung (U_{A}) der Wandlerschaltung (4) von einem Spannungssollwert (Uₛ) umfasst.

14. Vorrichtung nach einem der Ansprüche 11 bis 13,
**dadurch gekennzeichnet,**
**dass** der Halbleiterschalter (V) steuerseitig über ein galvanisch trennendes Element (11), insbesondere einen Optokoppler, mit der Steuer- bzw. Regeleinrichtung (6) verbunden ist.

15. Vorrichtung nach einem der Ansprüche 11 bis 14,
**gekennzeichnet durch**
dass der Steuer- bzw. Regeleinrichtung (6) ein Schwellwertschalter (5) nachgeschaltet oder zugeordnet ist, dem die Ausgangsspannung (U_{A}) der Wandlerschaltung (4) zur Erzeugung eines binären Steuersignals (S_{HS}, S_{LS}) für den Frequenzumrichter (3) zugeführt ist,
- wobei das Steuersignal (S_{HS}, S_{LS}) einen high-Pegel zum Betrieb des Frequenzumrichters (3) führt, wenn die Ausgangsspannung (U_{A}) einen oberen Schwellwert (U₁) überschreitet, und
- wobei das Steuersignal (S_{HS}, S_{LS}) einen eine Sicherheitsfunktion auslösenden low-Pegel führt, wenn die Ausgangsspannung (U_{A}) einen unteren Schwellwert (U₂) unterschreitet.

16. Verfahren zur Verbindung und sicheren Trennung eines Spannungsanschlusses (U₂) eines Antriebswechselrichters (3) für eine elektrische Maschine (2) an eine bzw. von einer Versorgungsspannung (U₁), bei dem die Versorgungsspannung (U₁) über eine Verbindungs- und Trennschaltung (20) mit zwei Schaltzweigen (20a, 20b) an den Spannungsanschluss (U₂) des Antriebswechselrichters (3) geführt wird,
- wobei in einem ersten Prüfmodus einer der Schaltzweige (20a, 20b) abgeschaltet und ein Sensorsignal (S1, S2) aus diesem Schaltzweige (20a, 20b) ausgelesen wird, während der andere Schaltzweig (20a, 20b) eingeschaltet ist und die Versorgungsspannung (U₁) an den Spannungsanschluss (U₂) des Antriebswechselrichters (3) führt,
- wobei anhand des Sensorsignals (S1, S2) erfasst wird, ob der jeweils abgeschaltete Schaltzweig (20a, 20b) funktionsfähig ist, die Versorgungsspannung (U₁) an den Spannungsanschluss (U₂) des Antriebswechselrichters (3) zu führen bzw. von diesem zu trennen, **dadurch gekennzeichnet dass** der von der Versorgungsspannung (U1) getrennte Spannungsanschluss (U2) des Antriebswechselrichters (3) über eine steuerbare Trenn- oder Erdungsschaltung (23) an das Bezugspotential der Versorgungsspannung (U1) geführt wird.

17. Verfahren nach Anspruch 16, bei dem bei von der Versorgungsspannung (U₁) getrenntem Spannungsanschluss (U₂) des Antriebswechselrichters (3) in einem zweiten Prüfmodus zunächst ein erster Halbleiterschalter (T3) eingeschaltet und ein hierzu serieller zweiter Halbleiterschalter (T4) der Trennschaltung (23) ausgeschaltet und/oder der zweite Halbleiterschalter (T4) eingeschaltet und der erste Halbleiterschalter (T3) ausgeschaltet sowie anschließend eine Spannung der Trennschaltung (23) erfasst und zur Funktionsprüfung der Trennschaltung (23) ausgewertet wird.

18. Verfahren nach Anspruch 17, bei dem im zweiten Prüfmodus die Spannung an einem Abgriff (26) eines Spannungsteilers (25) der Trennschaltung (23) erfasst und zu deren Funktionsprüfung ausgewertet wird, wenn beide Halbleiterschalter (T3, T4) der Trennschaltung (23) ausgeschaltet sind.

19. Verfahren nach einem der Ansprüche 16 bis 18, bei dem aus einer Eingangsspannung (U_{E}) eine potentialgetrennte Ausgangsspannung (U_{A}) erzeugt wird, aus der ein Steuersignal (S_{HS}, S_{LS}) für den Anlagenwechselrichter (3) zu dessen bestimmungsgemäßen Betrieb und zur Auslösung einer Sicherheitsfunktion sowie ein Ansteuersignal (S_{T}) für einen periodisch an die Eingangsspannung (U_{E}) geschalteten Halbleiterschalter (V) erzeugt und die Ausgangsspannung (U_{A}) begrenzt wird, wenn diese eine Schaltschwelle (U_{Max}) überschreitet.

## Claims

1. Device for connecting and safely isolating a voltage terminal (U₂) of a drive inverter (3) for an electric machine (2) with or by a supply voltage (U₁),
- having a connection and interruption circuit (20) with two circuit branches (21, 22) switched between the supply voltage (U₁) or the terminal (19) thereof and the voltage terminal (U₂) of the drive inverter (3), and
- having a control and/or command device (6) which, in terms of circuits and programmes, is arranged to switch the supply voltage (U₁) via the circuit branches (21, 22) on the voltage terminal (U₂) of the drive inverter (3) and disconnect one of the circuit branches (21, 22) in a first test mode and to select a sensor signal (SE1, SE2) from these circuit branches (21, 22), while the other circuit branch (21, 22) is switched on and the supply voltage (U₁) runs on the voltage terminal (U₂) of the drive inverter (3), **characterised in that** the voltage terminal (U2) of the drive inverter (3) is guided against the reference potential of the supply voltage (U1) via an isolating or earthing circuit (23) that is able to be actuated.

2. Device according to claim 1,
**characterised in that**
the circuit branches (21, 22) have a semiconductor switch (T1, T2) which is switched between the terminal (19) for the supply voltage (U₁) and the voltage terminal (U₂) of the drive inverter (3) and on the control or command device (6) on the actuation side, and have a sensor tap (SA1, SA2) guided to the control or command device (6).

3. Device according to claim 2,
**characterised in that**
the sensor tap (SA1, SA2) is guided between the semiconductor switch (T1, T2), in particular on the side of the emitter or source, and a diode (D1, D2).

4. Device according to one of claims 1 to 3,
**characterised by**
a redundant connection and interruption circuit (20) with two test channels (20a, 20b), wherein a first test channel (20a) is connected on the output side to a first terminal side (U₂ₐ), in particular the high-side, and a second test channel (20b) is connected on the output side to a second terminal side (U_{2b}), in particular the low-side, of the voltage terminal (U₂) of the drive inverter (3).

5. Device according to one of claims 1 to 4,
**characterised in that**
the control or command device (6) is arranged in terms of circuits and/or programmes to interrupt the connection created by the circuit branches (21, 22) between the supply voltage (U₁) and the voltage terminal (U₂) of the drive inverter (3), in particular because of a safety function being triggered.

6. Device according to one of claims 1 to 5,
**characterised in that**
the isolating or earthing circuit (23) comprises two serially switched semiconductor switches (T3, T4) that are able to be actuated by means of the control or command device (6), said semiconductor switches having a central tap (24) guided onto the control device (6).

7. Device according to claim 6,
**characterised in that**
the isolating or earthing circuit (23) comprises a voltage divider (25) switched in parallel to the semiconductor switches (T3, T4) with a potential or voltage tap (26) guided onto the control or command device (6), in particular connected to the central tap (24) of the semiconductor switches (T3, T4).

8. Device according to one of claims 1 to 7,
**characterised in that**
the control or command device (6), in the course of the interruption of the connection produced via the circuit branches (21, 22) between the supply voltage (U₁) and the voltage terminal (U₂) of the drive inverter (3), generates a control signal for the isolating or earthing circuit (23), such that the voltage terminal (U₂) of the drive inverter (3) is guided to the reference potential of the supply voltage (U₁).

9. Device according to one of claims 1 to 8,
**characterised in that**
in the voltage terminal (U₂) of the drive inverter (3), isolated from the supply voltage (U₁), the control or command device (6) in a second test mode detects the voltage of the semiconductor switches (T3, T4) at the central tap (24) when a first of the two semiconductor switches (T3, T4) of the isolating or earthing circuit (23) is switched off, and/or when the second of the two semiconductor switches (T3, T4) of the isolating or earthing circuit (23) is switched on and the first semiconductor switch (T3, T4) is switched off.

10. Device according to one of claims 8 to 10,
**characterised in that**
in the voltage terminal (U₂) of the drive inverter (3), isolated from the supply voltage (U₁), the control or command device (6) in a second test mode detects the voltage of the semiconductor switch (T3, T4) at the central tap (24) or at the potential tap (26) of the voltage divider (25) when both semiconductors (T3, T4) of the isolating or earthing circuit (23) are switched off.

11. Device according to one of claims 1 to 10,
**characterised by**
an in particular redundantly designed converter circuit (4) which has a transformer (T) with a semiconductor switch (V) in its primary side for providing a potentially isolated output voltage (U_{A}) out of an input voltage (U_{E}) and an rectifier (D) on its secondary side, of which the control or command device (6) is downstream, wherein the in particular redundantly designed control or command device (6), in terms of circuits and programmes, is arranged to generate a control signal (S_{HS}, S_{LS}) for the drive inverter (3) for triggering the safety function and an actuating signal (S_{T}) for the semiconductor switch (V) if the output voltage (U_{A}) exceeds a maximum value (U_{MAX}).

12. Device according to claim 11,
**characterised in that**
the control or command device (6) has a comparator and threshold value switch function (7, 8) supplied with the output voltage (U_{A}) of the converter circuit (4) for activating the actuating signal (S_{T}) for the semiconductor switch (V).

13. Device according to claim 11 or 12,
**characterised in that**
the control or command device (6) comprises a target-actual comparator (9) and a pulse modulator (10) downstream thereof for adjusting the work frequency of the semiconductor switch (V) by means of varying the output voltage (U_{A}) of the converter circuit (4) by a voltage target value (U_{S}).

14. Device according to one of claims 11 to 13,
**characterised in that**
the semiconductor switch (V) is connected on its control side to the control or command device (6) via a galvanically isolating element (11), in particular an optical coupler.

15. Device according to one of claims 11 to 14,
**characterised in that**
a threshold switch (5) is arranged downstream of, or assigned to, the control or command device (6), to which the output voltage (U_{A}) of the converter circuit (4) is supplied to generate a binary control signal (S_{HS}, S_{LS}) for the frequency converter (3),
- wherein the control signal (S_{HS}, S_{LS}) leads a high level for operating the frequency converter (3) if the output voltage (U_{A}) exceeds an upper threshold (U₁), and
- wherein the control signal (S_{HS}, S_{LS}) leads a low level that triggers a safety function if the output voltage (U_{A}) falls below a lower threshold (U₂).

16. Method for connecting and safely isolating a voltage terminal (U₂) of a drive inverter (3) for an electric machine (2) on a or by a supply voltage (U₁), in which the supply voltage (U₁) is guided along the voltage terminal (U₂) of the drive inverter (3) via a connection and isolation circuit (2) with two circuit branches (20a, 20b),
- wherein, in a first test mode, one of the circuit branches (20a, 20b) is disconnected and a sensor signal (S1, S2) is read out from this circuit branch (20a, 20b), while the other circuit branch (20a, 20b) is switched on and the supply voltage (U₁) is guided to the voltage terminal (U₂) of the drive inverter (3),
- wherein the sensor signal (S 1, S2) detects whether the respectively disconnected circuit branch (20a, 20b) is able to function to lead the supply voltage (U₁) onto the voltage terminal (U₂) of the drive inverter (3) or isolate it from this, **characterised in that** the voltage terminal (U2) of the drive inverter (3), isolated from the supply voltage (U1), is led along the reference potential of the supply voltage (U1) via a controllable isolating or earthing circuit (23).

17. Method according to claim 16, in which, in the voltage terminal (U₂) of the drive inverter (3), isolated from the supply voltage (U₁), a first semiconductor switch (T3) is initially switched on in a second test mode and then a second semiconductor switch (T4) of the isolating circuit (23), which is in series thereto, is switched off and/or the second semiconductor switch (T4) is switched on and the first semiconductor switch (T3) is switched off and subsequently a voltage of the isolating circuit (23) is detected and assessed for function testing of the isolating circuit (23).

18. Method according to claim 17, in which, in the second test mode, the voltage in a tap (26) of a voltage divider (25) of the isolating circuit (23) is detected and assessed for its function testing, when both semiconductor switches (T3, T4) of the isolating circuit (23) are switched off.

19. Method according to one of claims 16 to 18, in which a potentially isolated output voltage (U_{A}) is generated from an input voltage (U_{E}), a control signal (S_{HS}, S_{LS}) being generated from said output voltage for the system inverter (3) with regards to its intended operation and for triggering a safety function, and an actuating signal (S_{T}) for a semiconductor switch (V) that is periodically switched in the input voltage (U_{E}) and the output voltage (U_{A}) is limited if it exceeds a switching threshold (U_{MAX}).

## Revendications

1. Dispositif pour relier à une tension d'alimentation (U₁) et isoler de manière sûre de celle-ci, une borne de branchement de tension (U₂) d'un onduleur d'entrainement ou de traction (3) pour une machine électrique (2),
- comprenant un circuit de liaison et d'interruption (20) avec deux branches de circuit (21, 22) montées entre la tension d'alimentation (U₁) ou sa borne de branchement (19) et la borne de branchement de tension (U₂) de l'onduleur d'entrainement (3), et
- comprenant un dispositif de commande et/ou de régulation (6), qui est configurée sur le plan de la technique des circuits ou de programmation, pour commuter la tension d'alimentation (U₁) à la borne de branchement de tension (U₂) de l'onduleur d'entrainement (3), par l'intermédiaire des branches de circuit (21, 22), ainsi que pour, dans un premier mode de test, mettre à l'arrêt l'une des branches de circuit (21, 22) et lire un signal de capteur (SE1, SE2) en provenance de cette branche de circuit (21, 22), pendant que l'autre branche de circuit (21, 22) est en marche et que la tension d'alimentation (U₁) mène à la borne de branchement de tension (U₂) de l'onduleur d'entrainement (3),
**caractérisé**
- **en ce que** la borne de branchement de tension (U₂) de l'onduleur d'entrainement (3) mène au potentiel de référence de la tension d'alimentation (U₁), par l'intermédiaire d'un circuit d'isolement ou de mise à la terre (23) pouvant être commandé.

2. Dispositif selon la revendication 1,
**caractérisé**
**en ce que** les branches de circuit (21, 22) comportent un commutateur à semi-conducteur (T1, T2), qui est monté entre la borne de branchement (19) pour la tension d'alimentation (U₁) et la borne de branchement de tension (U₂) de l'onduleur d'entrainement (3), ainsi que raccordé, côté commande, à l'unité de commande ou de régulation (6), et comportent également un piquage de capteur (SA1, SA2) menant au dispositif de commande ou de régulation (6).

3. Dispositif selon la revendication 2,
**caractérisé**
**en ce que** le piquage de capteur (SA1, SA2) mène entre les commutateurs à semi-conducteur (T1, T2), notamment côté émetteur ou source, et une diode (D1, D2).

4. Dispositif selon l'une des revendications 1 à 3,
**caractérisé**
**par** un circuit de liaison et d'interruption redondant (20) avec deux canaux de test (20a, 20b), un premier canal de test (20a) étant relié, côté sortie, à un premier coté de branchement (U₂ₐ), notamment le côté haut (high-side), et un deuxième canal de test (20b) étant relié, côté sortie, à un deuxième coté de branchement (U_{2b}), notamment le côté bas (low-side) de la borne de branchement de tension (U₂) de l'onduleur d'entrainement (3).

5. Dispositif selon l'une des revendications 1 à 4,
**caractérisé**
**en ce que** le dispositif de commande ou de régulation (6) est configuré, sur le plan de la technique des circuits et/ou de la programmation, pour interrompre, notamment à la suite du déclenchement d'une fonction de sécurité, la liaison, établie par l'intermédiaire des branches de circuit (21, 22), entre la tension d'alimentation (U₁) et la borne de branchement de tension (U₂) de l'onduleur d'entrainement (3).

6. Dispositif selon l'une des revendications 1 à 5,
**caractérisé**
**en ce que** le circuit d'isolement ou de mise à la terre (23) comprend deux commutateurs à semi-conducteur (T3, T4) montés en série, pouvant être commandés par le dispositif de commande ou de régulation (6) et présentant un piquage central (24) mené au dispositif de commande (6).

7. Dispositif selon la revendication 6,
**caractérisé**
**en ce que** le circuit d'isolement ou de mise à la terre (23) comprend un diviseur de tension (25), qui est monté en parallèle avec les commutateurs à semi-conducteur (T3, T4), et présente un piquage de tension ou de potentiel (26) mené au dispositif de commande ou de régulation (6) et notamment relié au piquage central (24) des commutateurs à semi-conducteur (T3, T4).

8. Dispositif selon l'une des revendications 1 à 7,
**caractérisé**
**en ce que** le dispositif de commande ou de régulation (6), dans le cadre de l'interruption de la liaison établie, par l'intermédiaire des branches de circuit (21, 22), entre la tension d'alimentation (U₁) et la borne de branchement de tension (U₂) de l'onduleur d'entrainement (3), produit un signal de commande pour le circuit d'isolement ou de mise à la terre (23), de manière à ce que la borne de branchement de tension (U₂) de l'onduleur d'entrainement (3) mène au potentiel de référence de la tension d'alimentation (U₁).

9. Dispositif selon l'une des revendications 1 à 8,
**caractérisé**
**en ce que** pour une borne de branchement de tension (U₂) de l'onduleur d'entrainement (3) isolée de la tension d'alimentation (U₁), le dispositif de commande ou de régulation (6), dans un deuxième mode de test, relève la tension au niveau du piquage central (24) des commutateurs à semi-conducteur (T3, T4) lorsqu'un premier des deux commutateurs à semi-conducteur (T3, T4) du circuit d'isolement ou de mise à la terre (23) est fermé et le deuxième commutateur à semi-conducteur (T3, T4) est ouvert, et/ou lorsque le deuxième des deux commutateurs à semi-conducteur (T3, T4) du circuit d'isolement ou de mise à la terre (23) est fermé et le premier commutateur à semi-conducteur (T3, T4) est ouvert.

10. Dispositif selon l'une des revendications 8 à 10,
**caractérisé**
**en ce que** pour une borne de branchement de tension (U₂) de l'onduleur d'entrainement (3) isolée de la tension d'alimentation (U₁), le dispositif de commande ou de régulation (6), dans le deuxième mode de test, relève la tension au niveau du piquage central (24) des commutateurs à semi-conducteur (T3, T4) ou au niveau du piquage de potentiel (26) du diviseur de tension (25), lorsque les deux commutateurs à semi-conducteur (T3, T4) du circuit d'isolement ou de mise à la terre (23) sont ouverts.

11. Dispositif selon l'une des revendications 1 à 10,
**caractérisé**
**par** un circuit de convertisseur (4), notamment d'une réalisation redondante, qui comprend un transformateur (T) avec, côté primaire, un commutateur à semi-conducteur (V) pour fournir, à partir d'une tension d'entrée (U_{E}), une tension de sortie (U_{A}) isolée galvaniquement en potentiel, ainsi que, côté secondaire, un redresseur (D), circuit de convertisseur en aval duquel est monté le dispositif de commande ou de régulation (6), ledit dispositif de commande ou de régulation (6), notamment d'une réalisation redondante, étant conçu, sur le plan de la technique des circuits et/ou de la programmation, pour produire un signal de commande (S_{HS}, S_{LS}) pour l'onduleur d'entrainement (3) pour déclencher la fonction de sécurité, et un signal de commande (S_{T}) pour le commutateur à semi-conducteur (V), lorsque la tension de sortie (U_{A}) dépasse une valeur maximale (U_{Max}).

12. Dispositif selon la revendication 11,
**caractérisé**
**en ce que** le dispositif de commande ou de régulation (6) comprend une fonction de comparateur et de commutateur de valeur de seuil (7, 8), qui est alimentée par la tension de sortie (U_{A}) du circuit de convertisseur (4), pour l'activation du signal de commande (S_{T}) destiné au commutateur à semi-conducteur (V).

13. Dispositif selon la revendication 11 ou la revendication 12,
**caractérisé**
**en ce que** le dispositif de commande ou de régulation (6) comprend un comparateur valeur réelle-valeur de consigne (9) et, monté en aval de celui-ci, un modulateur d'impulsion (10) pour régler la fréquence de travail du commutateur à semi-conducteur (V), au regard d'un écart de la tension de sortie (U_{A}) du circuit de convertisseur (4) par rapport à une valeur de consigne de tension (U_{S}).

14. Dispositif selon l'une des revendications 11 à 13,
**caractérisé**
**en ce que** le commutateur à semi-conducteur (V) est relié, côté commande, au dispositif de commande ou de régulation (6), par l'intermédiaire d'un élément d'isolement galvanique (11), notamment un optocoupleur.

15. Dispositif selon l'une des revendications 11 à 14,
**caractérisé**
**par le fait qu'**un commutateur de valeur de seuil (5) est monté à la suite du dispositif de commande ou de régulation (6) ou est associé à celui-ci, commutateur auquel est amenée la tension de sortie (U_{A}) du circuit de convertisseur (4) pour produire un signal de commande binaire (S_{HS}, S_{LS}) pour le convertisseur de fréquences (3),
- le signal de commande (S_{HS}, S_{LS}) conduisant un niveau haut pour le fonctionnement du convertisseur de fréquences (3), lorsque la tension de sortie (U_{A}) dépasse une valeur de seuil supérieure (U₁), et
- le signal de commande (S_{HS}, S_{LS}) conduisant un niveau bas déclenchant une fonction de sécurité, lorsque la tension de sortie (U_{A}) passe en-dessous d'une valeur de seuil inférieure (U₂).

16. Procédé pour relier à une tension d'alimentation (U₁) et isoler de manière sûre de celle-ci, une borne de branchement de tension (U₂) d'un onduleur d'entrainement ou de traction (3) pour une machine électrique (2), d'après lequel la tension d'alimentation (U₁) est menée à la borne de branchement de tension (U₂) de l'onduleur d'entrainement (3) par l'intermédiaire d'un circuit de liaison et de sectionnement (20) comprenant deux branches de circuit (20a, 20b), procédé
- d'après lequel, dans un premier mode de test, on met à l'arrêt l'une des branches de circuit (20a, 20b) et on procède à la lecture d'un signal de capteur (S1, S2) en provenance de cette branche de circuit (20a, 20b), pendant que l'autre branche de circuit (20a, 20b) est en marche et que la tension d'alimentation (U₁) mène à la borne de branchement de tension (U₂) de l'onduleur d'entrainement (3),
- d'après lequel, à l'aide du signal de capteur (S1, S2), on détecte si la branche de circuit (20a, 20b) respectivement à l'arrêt est fonctionnellement apte à mener la tension d'alimentation (U₁) à la borne de branchement de tension (U₂) de l'onduleur d'entrainement (3) ou à l'isoler de celle-ci,
**caractérisé**
**en ce que** la borne de branchement de tension (U₂) de l'onduleur d'entrainement (3), isolée de la tension d'alimentation (U₁), mène au potentiel de référence de la tension d'alimentation (U₁), par l'intermédiaire d'un circuit d'isolement ou de mise à la terre (23) pouvant être commandé.

17. Procédé selon la revendication 16, d'après lequel pour une borne de branchement de tension (U₂) de l'onduleur d'entrainement (3), isolée de la tension d'alimentation (U₁), dans un deuxième mode de test, un premier commutateur à semi-conducteur (T3) est tout d'abord fermé et un deuxième commutateur à semi-conducteur (T4) du circuit d'isolement (23), en série avec le précédent, est ouvert, et/ou le deuxième commutateur à semi-conducteur (T4) est fermé et le premier commutateur à semi-conducteur (T3) est ouvert, et on relève ensuite une tension du circuit d'isolement (23), qui est traitée pour tester le fonctionnement du circuit d'isolement (23).

18. Procédé selon la revendication 17, d'après lequel lors du deuxième mode de test, on relève la tension au niveau d'un piquage (26) d'un diviseur de tension (25) du circuit d'isolement (23), qui est traitée pour tester le fonctionnement de ce dernier, lorsque les deux commutateurs à semi-conducteur (T3, T4) du circuit d'isolement (23) sont ouverts.

19. Procédé selon l'une des revendications 16 à 18, d'après lequel on produit, à partir d'une tension d'entrée (U_{E}), une tension de sortie (U_{A}) isolée galvaniquement, à partir de laquelle est produit un signal de commande (S_{HS}, S_{LS}) pour l'onduleur (3) de l'installation en vue de son fonctionnement approprié et pour déclencher une fonction de sécurité, ainsi qu'un signal de commande (S_{T}) pour un commutateur à semi-conducteur (V) commuté périodiquement à la tension d'entrée (U_{E}), et on limite la tension de sortie (U_{A}) lorsque celle-ci dépasse le seuil de commutation (U_{MAX}).
